Europäisches Patentamt

European Patent Office

Office européen des brevets

(11) Numéro de publication: **0 050 557**
**A1**

## (12) DEMANDE DE BREVET EUROPEEN

(21) Numéro de dépôt: **81401588.9**

(22) Date de dépôt: **13.10.81**

(51) Int. Cl.³: **G 01 M 7/00,** G 01 N 3/32,
G 01 N 29/04

(30) Priorité: **16.10.80 FR 8022101**

(43) Date de publication de la demande: **28.04.82**
· **Bulletin 82/17**

(84) Etats contractants désignés: **AT BE CH DE GB IT LI LU NL SE**

(71) Demandeur: **SCIENCES CONTROLES, 16, place Vendôme, F-75001 Paris (FR)**

(72) Inventeur: **Georges, Yves, 63, rue Dreyfus, F-78120 Rambouillet (FR)**

(74) Mandataire: **Ramey, Daniel et al, Cabinet NETTER 40, rue Vignon, F-75009 Paris (FR)**

(54) Procédé et dispositif le mettant en oeuvre pour la détection de défauts de pièces, produits, ou objets manufacturés.

(57) Procédé et dispositif le mettant en œuvre pour la détection de défauts de pièces, produits, ou objets manufacturés.

L'invention concerne un procédé et un dispositif de contrôle de pièces.

Le procédé consiste à comparer le mouvement d'une pièce soumise à un ensemble de forces à celui d'une pièce sans défaut soumise au même ensemble. Il comprend un support transparent (15) sur lequel repose librement la pièce (21). Le support (15) est solidaire d'un émetteur de lumière (1) et d'un détecteur (13) au moyen des vérins (5 et 18) et est mis en vibration par l'électro-aimant (9). Les signaux obtenus sont comparés aux signaux obtenus pour une pièce sans défaut.

L'invention s'applique notamment au contrôle des pilules médicamenteuses, des plombs de chasse, des boutons vestimentaires, des billes pour roulements, etc.

1

## Procédé et dispositif le mettant en oeuvre pour la détection de défauts de pièces, produits, ou objets manufacturés.

L'invention concerne le contrôle des pièces, produits ou objets manufacturés et a pour objet un procédé et un dispositif pour détecter les défauts d'une pièce.

Par pièce, on entend un élément solide (au sens physique du terme) quelconque.

Des procédés connus pour détecter des défauts d'une pièce consistent à projeter l'image éventuellement grossie d'une pièce sur un écran, puis à examiner cette image visuellement ou à l'aide d'un système automatique par exemple de traitement de données. Ces procédés ont pour inconvénient que seules les parties de la pièce visibles sur l'image peuvent être examinées.

Ils ne permettent pas de détecter des défauts de masse d'homogénéité ou de forme sur la partie non visible de la pièce sur l'image de la pièce.

D'autres procédés consistent à faire passer lesdites pièces dans un gabarit approprié, ce qui ne permet qu'un contrôle des dimensions extérieures sur une surface périphérique déterminée.

L'invention vise à pallier ces inconvénients. Elle propose dans ce but un procédé pour détecter les défauts d'une pièce, qui consiste à :

- exercer sur ladite pièce un ensemble de forces susceptibles de la mettre en mouvement;

- détecter les mouvements de ladite pièce ;
- déterminer des mouvements de référence ; et
- comparer les mouvements de ladite pièce aux mouvements de référence.

Pour un ensemble de forces donné, le mouvement de la pièce dépendra des paramètres physiques propres de cette pièce, à savoir : sa masse, la position de son centre de gravité (homogénéité), sa forme, les coefficients de frottements pièce/support et pièce/milieu ambiant, chacun de ces paramètres ayant une influence plus ou moins grande suivant le milieu environnant ladite pièce et la nature de celle-ci.

La comparaison des mouvements de la pièce à des mouvements de référence permettra de détecter des défauts de cette pièce par rapport à une autre pièce exempte de défauts qui, soumise au même ensemble de forces, se déplacera suivant les mouvements de référence. Ces mouvements de référence peuvent être obtenus par exemple par calcul.

Suivant une autre caractéristique de l'invention, lesdits mouvements de référence sont déterminés en excerçant ledit ensemble de forces sur une pièce exempte de défauts, et en choisissant comme mouvements de référence les mouvements de ladite pièce exempte de défauts engendrés par ledit ensemble de forces.

Cette caractéristique facilite la mise en oeuvre du procédé selon l'invention dans la mesure où l'on dispose de moyens simples pour mesurer les paramètres définissant un mouvement.

Selon une autre caractéristique avantageuse de l'invention, on exerce sur ladite pièce un ensemble de forces de façon à la faire vibrer librement dans un milieu donné, par exemple par :

- un champ magnétique alternatif pour une pièce ferro-magnétique;

- vibration de son support pour une pièce quelconque;

- vibration du milieu par onde sonore; etc ...

Le caractère vibratoire du mouvement de la pièce en facilite l'analyse dans un champ réduit.

Selon une autre caractéristique complémentaire de la précédente, le procédé selon l'invention consiste à comparer les mouvements de la pièce aux mouvements de référence en comparant leurs amplitudes (instantanée,moyenne ou maximale) et leurs déphasages respectifs. Ces paramètres de mouvement paraissent en effet suffisants dans la plupart des cas pour détecter les défauts principaux de masse, forme et homogénéité d'une pièce.

Selon une autre caractéristique préférée de ce procédé selon l'invention, les mouvements de ladite pièce sont détectés en:

- plaçant ladite pièce dans un milieu susceptible d'être perturbé par les mouvements de celle-ci; et en

- détectant les perturbations du milieu engendrées par les mouvements de ladite pièce.

Une pièce métallique ferreuse peut, par exemple, être placée dans un champ magnétique, une pièce opaque à certaines radiations électromagnétiques dans ces dernières. On peut également la placer dans un champ sonore ou ultrasonore approprié (de longueur d'onde faible en regard dè la pièce). Cette caractéristique présente un intérêt chaque fois qu'il est plus simple de mesurer les perturbations du milieu dans lequel la pièce est placée que de mesurer directement les mouvements de la pièce (cas de petites pièces où il semble difficile de mesurer directement le mouvement par des jauges ou des capteurs).

Selon une autre caractéristique du procédé selon l'invention, il est possible de déterminer le mouvement de ladite pièce en analysant le bruit qu'elle émet soit dans le milieu ambiant, soit dans le support, au cours de ses déplacements, ces bruits étant produits par les frottements sur le support et le milieu ambiant.

Un dispositif mettant en oeuvre le procédé selon l'invention comprendra ainsi d'une façon générale :

- des moyens d'action pour exercer sur ladite pièce un ensemble de forces susceptibles de la mettre en mouvement ;

- des moyens de détection pour détecter les mouvements de ladite pièce ;

- des moyens d'émission émettant un signal représentatif des mouvements de référence ;

- des moyens de comparaison des mouvements de la pièce aux mouvements de référence.

Une forme avantageuse de réalisation des moyens d'action comprend un générateur de vibrations agissant sur le support sur lequel repose librement ladite pièce, par exemple un électro-aimant alimenté en courant alternatif induisant un flux magnétique dans une pièce ferromagnétique solidaire dudit support. Ce moyen peu onéreux à mettre en oeuvre peut être remplacé par tout autre moyen équivalent,comme un moteur accouplé à un système mécanique générant un mouvement alternatif dudit support, un générateur sonore ou pneumatique faisant vibrer ledit support, etc...

Selon une autre caractéristique du dispositif selon l'invention, les moyens d'émission comportent un détecteur de mouvement du support.

Les mouvements de référence d'une pièce exempte de défaut sont en effet déterminés par le mouvement du support et les caractéristiques de cette pièce.

Le mouvement de référence peut donc être déduit du mouvement du support.

Cette caractéristique permet d'asservir en continu l'émission du signal de référence aux caractéristiques du champ de forces vibrant s'exerçant sur la pièce. Le détecteur de mouvement du support peut également servir à contrôler le courant alternatif parcourant l'électro-aimant par une classique contre-réaction. Si on n'utilise pas le détecteur de mouvement du support, on peut également utiliser comme moyen d'émission du mouvement de référence le signal alimentant le générateur de vibrations.

Selon une autre caractéristique du dispositif selon l'invention, les moyens de détection comprennent :

- un moyen d'éclairage mono- ou poly-chromatique de ladite pièce; et

- un moyen de mesure des perturbations du flux lumineux engendrées par les mouvements de ladite pièce.

Le flux lumineux mesuré peut être le flux transmis ou le flux réfléchi ou une partie d'entre eux ou une combinaison des deux. Le moyen de mesure comprend une ou plusieurs cellules photosensibles de caractéristiques appropriées à la ou les longueurs d'onde du flux.

Les moyens d'éclairage peuvent être, selon les cas (dimensions, couleur de la pièce), des lampes à incandescence, à gaz rare, de diodes électroluminescentes, etc ...

Selon une forme avantageuse de réalisation du dispositif selon l'invention :

- le support sur lequel repose ladite pièce est transparent au flux issu du moyen d'éclairage;

- le moyen d'éclairage et le moyen de mesure sont situés de part et d'autre de ladite pièce;

- il comporte de plus un moyen pour masquer en partie la projection de ladite pièce sur le moyen de mesure suivant la direction du flux lumineux.

Le moyen de masque a pour objet de permettre une mesure de variation de flux lumineux homogène non intercepté par ladite pièce. Dans le cas d'un flux non homogène (par exemple focalisé en un point), ce masque n'a pas de fonction indispensable.

Selon une forme préférentielle du dispositif selon l'invention, le moyen d'éclairage et le moyen de mesure sont solidaires du support. Les variations du flux lumineux détectées par le moyen de mesure ne dépendent alors que du mouvement de la pièce. Ceci prend tout son intérêt lorsque l'on mesure le flux à travers un support transparent induisant lui-même des perturbations dans l'homogénéité du flux lumineux.

Selon une caractéristique pratique du dispositif selon l'invention, le support comporte une alvéole dans laquelle la pièce prend place avec du jeu.

Selon une autre caractéristique pratique, le support constitue une partie du futur emballage de la pièce. Ceci permet d'intégrer le dispositif selon l'invention en fin de chaîne de fabrication de la pièce, particulièrement lorsque l'emballage formant ledit support est transparent.

Selon une autre caractéristique du dispositif selon l'invention, dans le cas où la pièce est soumise à un ensemble de forces vibratoires, le moyen de comparaison comprend :

- un comparateur de phase et un comparateur d'amplitude reliés auxdits moyens d'émission et auxdits moyens de détection; et

- une logique d'erreur reliée auxdits comparateurs, ladite logique d'erreur signalant si la pièce est ou n'est pas exempte de défaut.

D'une manière pratique, les paramètres de phase et d'amplitude sont mesurés à une fréquence de résonance du système pièce-support, pour une pièce dite exempte de défaut, ceci déterminant ledit ensemble de forces vibrantes. Ces paramètres sont alors mesurés pour une pièce quelconque mise en mouvement par ce même ensemble de forces vibrantes. La logique d'erreur peut émettre un signal de commande d'un organe éliminant la pièce défectueuse.

Selon une autre caractéristique très utile pour l'application industrielle du dispositif selon l'invention, le support formant éventuellement une partie du futur emballage de la pièce peut être momentanément désolidarisé des moyens d'éclairage et de détection au moyen de vérins hydrauliques, pneumatiques ou magnétiques.

En effet, l'emballage étant le plus souvent continu, il est nécessaire de pouvoir déplacer commodément la partie formant le support dans le dispositif selon l'invention.

Dans la description qui suit, faite à titre d'exemple, on se réfère aux dessins annexés, dans lesquels :

la figure 1 est une vue schématique en coupe d'un dispositif selon l'invention;

la figure 2 représente schématiquement, sous forme de blocs, le circuit du dispositif selon l'invention;

les figures 3 et 4 représentent de façon schématique une chaîne de production de produits comprenant un dispositif selon l'invention.

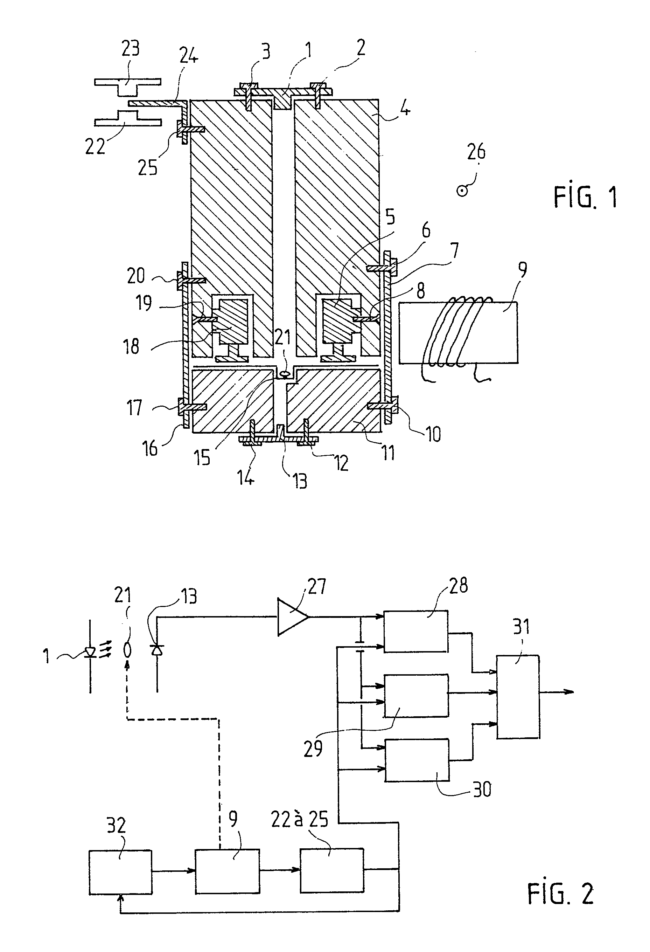

On se réfère d'abord à la figure 1, qui est une vue schématique en coupe d'une forme de réalisation d'un dispositif selon l'invention.

Dans cet exemple, la pièce à contrôler est une pillule, par exemple une pilule contraceptive ou d'un produit médicamenteux quelconque.

Le dispositif comprend un bâti supérieur 4 fixé, au moyen de plaques latérales 7 et 16 et de vis 6 et 10, et 17 et 20 respectivement, à un bâti inférieur 11. Le support 15 des pièces ou pilules 21 se trouve entre les deux bâtis 4 et 11, la pièce ou pilule 21 reposant librement dans une alvéole ou cavité du support 15, celui-ci constituant par exemple une partie de l'emballage de la pièce ou pilule.

Le bâti supérieur 4 est équipé d'un moyen d'éclairage 1, par exemple un émetteur de rayonnement infrarouge tel qu'une diode électroluminescente, fixé à ce bâti par des vis 2 et 3. Un moyen 13 de détection du rayonnement produit par l'émetteur 1 est fixé sous le bâti inférieur 11 par des vis 12 et 14, ce moyen 13 étant par exemple une photodiode sensible au rayonnement infrarouge. L'émetteur 1 et le détecteur 13 sont placés aux extrémités d'un conduit vertical traversé par le support 15 et les pièces ou pilules 21. Le support 15 est transparent au rayonnement de l'émetteur 1.

Le bâti supérieur 4 porte, par l'intermédiaire de vis 8 et 19 ou analogue, des vérins 5 et 18 permettant d'appliquer le support 15 sur la face supérieure du bâti inférieur 11 et donc de solidariser temporairement ce support 15 et les bâtis 4 et 11.

La plaque latérale 7 est en métal ferro-magnétique, par exemple en acier doux, et sur cette plaque agit un électro-aimant 9 dans une direction contenue dans le plan du dessin et perpendiculaire à la direction du rayonnement produit par l'émetteur 1 et dirigé vers la pièce 21 et le détecteur 13. Le bâti supérieur 4 porte encore, au moyen d'une vis 25 ou analogue, une équerre 24 qui forme, avec un émetteur 23 de rayonnement infrarouge (tel qu'une diode électroluminescente) et un récepteur 22 de rayonnement infrarouge (tel qu'une diode photosensible), un détecteur de déplacement du support 15 de la pièce 21 (c'est-à-dire du déplacement du bâti supérieur 4). L'émetteur 23 et le récepteur 22 sont en général portés par le même bâti fixe que l'électro-aimant 9, ce bâti fixe n'étant pas représenté en figure 1.

Sur la figure 2, qui représente schématiquement le circuit d'un dispositif selon l'invention, on voit la pièce 21 placée entre l'émetteur 1 et le détecteur 13. La sortie de ce détecteur est reliée par un amplificateur 27 à une entrée d'un comparateur 28, une entrée d'un comparateur 29 et une entrée d'un comparateur 30, ces trois comparateurs étant ainsi en parallèle. Chaque comparateur 28, 29 et 30 comprend une autre entrée reliée à la sortie d'un bloc désigné par les références 22 - 25 et qui forme le détecteur de mouvement de référence ou détecteur de mouvement du support. L'entrée de ce bloc est représentée schématiquement reliée à la sortie de l'électro-aimant 9 alimenté par un générateur de courant alternatif 32 de façon à former un générateur de vibrations. La sortie du détecteur 22-25 est reliée à une entrée du générateur 32 de courant alternatif,en formant une boucle de contre-réaction. La ligne en trait pointillé entre le bloc 9 et la pièce 21 indique que cette pièce est soumise indirectement aux vibrations produites par l'électro-aimant 9.

Le comparateur 28 est destiné par exemple à comparer les amplitudes efficaces des mouvements de la pièce 21 et du support, le comparateur 29 peut être destiné à comparer leurs amplitudes instantanées, et le comparateur 30 est un comparateur de phase.

Les sorties des comparateurs 28, 29 et 30 sont reliées aux entrées d'une logique d'erreur 31, telle qu'un circuit à seuils, dont le signal de sortie est utilisé pour commander un dispositif d'élimination ou de retrait d'une pièce 21.

On procède en pratique de la façon suivante :

On fait passer dans le dispositif une pièce 21 que l'on sait exempte de défaut. On alimente l'électro-aimant 9 par le générateur 32 de courant alternatif et l'on enregistre les résultats des comparaisons des amplitudes efficaces et/ou des amplitudes instantanées et/ou des phases des mouvements de la pièce 21 et de son support. Ces résultats peuvent être introduits dans le circuit logique 31 ou intégrés au circuit de la figure 2 de toutes façons appropriées. Le dispositif est alors calibré pour le contrôle des pièces 21.

Lors du contrôle de ces pièces, chaque pièce 21 placée dans une alvéole ou une cavité du support 15 est déplacée avec le support 15 dans une direction perpendiculaire au plan du dessin et indiquée par la référence 26. Quand le support est rendu solidaire des bâtis 4 et 11 par les vérins 5 et 18, la pièce 21 est soumise, ainsi que son support, aux vibrations produites par l'électro-aimant 9, les comparaisons des amplitudes efficaces et/ou instantanées et/ou des phases des mouvements de la pièce et de son support sont réalisées et les résultats de ces comparaisons introduits dans le circuit 31 sont comparés aux résultats des mêmes comparaisons effectuées avec une pièce 21 exempte de défaut. Si une ou des différences supérieures à des valeurs prédéterminées sont constatées, la pièce 21 est retirée de la chaîne de fabrication.

Quand la pièce 21 est une pilule, par exemple une pilule contraceptive, on peut ainsi déterminer son absence ou sa présence dans l'alvéole du support 15, si la pilule est ébréchée ou déformée superficiellement, si elle est brisée en plusieurs morceaux, si elle est contenue avec des morceaux d'une autre pilule dans l'alvéole, etc...

11

0050557

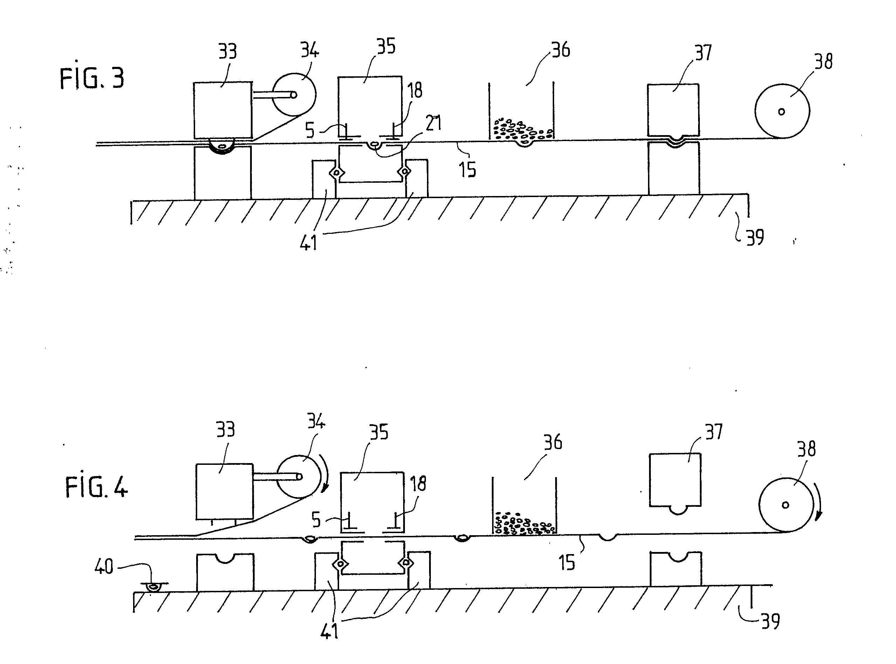

On se réfère maintenant aux figures 3 et 4 qui représentent un dispositif selon l'invention intégré à une chaîne de fabrication.

Le support 15 est issu d'un rouleau 38, les alvéoles destinées à recevoir les pilules étant formées par un ensemble 37 qui chauffe et déforme le support 15 par estampage. La référence 36 désigne un magasin à pilules.; la référence 35 désigne le dispositif de contrôle selon l'invention; la référence 34 désigne un rouleau de papier aluminium qui peut être thermocollé pour obturer les alvéoles par un ensemble 33 qui réalise également le découpage de l'emballage formé par le support 15 et le papier aluminium.

Dans un premier temps, le support 15 est immobile et est alors estampé par le dispositif 37, et fermé et découpé par le dispositif 33. Simultanément, le dispositif 35 selon l'invention fonctionne, c'est-à-dire que les vérins 5 et 18 sont actionnés pour solidariser le support 15 et le dispositif 35 et le contrôle est effectué. Dans un deuxième temps, les dispositifs 37 et 33 s'écartent du support 15 pour permettre l'avancement de celui-ci dans le sens indiqué par la flèche. Simultanément, le dispositif 35 selon l'invention est désactivé, les vérins 5 et 18 étant écartés du support 15 pour en permettre l'avancement.

Le dispositif 35 selon l'invention est relié à la machine de production (dont une table ou bâti est représenté en 39) par un guidage à rainures et billes 41 permettant de le déplacer en vibrations, perpendiculairement à la direction de déplacement du support 15, lorsque l'électro-aimant 9 est excité.

Dans les chaînes connues de fabrication de pilules ou produits analogues, il existe en général un espace libre assez important entre le magasin de distribution 36 et le poste 33, cet espace libre étant jusqu'à présent utilisé pour effectuer un contrôle visuel du contenu des alvéoles, de sorte que l'on peut facilement loger à cet endroit le dispositif 35 selon l'invention et l'intégrer aux chaînes existantes.

La référence 40 désigne en figure 4 une pilule emballée, après découpage du support par le poste 33. C'est à la sortie de ce poste que l'on agencera le dispositif chargé d'exploiter la sortie du circuit 31 de la figure 2, de façon à éliminer les pièces défectueuses.

Bien entendu, dans de telles chaînes de fabrication, les pilules ne sont pas emballées une à une, mais par groupes de deux à quatre plaquettes de 21 pilules. Bien évidemment, le dispositif selon l'invention peut être agencé,en multi-pliant le nombre de dispositifs émetteurs, détecteurs et de comparaison,de façon à pouvoir contrôler simultanément le nombre voulu de pilules. Le temps d'immobilisation du support 15 dans les chaînes de fabrication existantes est de l'ordre de la seconde, ce qui est amplement suffisant pour faire le contrôle. Dans le cas où il faut contrôler simultanément les pilules de quatre plaquettes, on peut remplacer le dispositif de comparaison précédemment décrit par un dispositif à lecture multiplex, afin de ne pas augmenter considérablement le nombre de comparateurs. Un tel dispositif peut alors être commandé par un microprocesseur qui servira de moyen de comparaison et de circuit logique d'erreur.

Le procédé et le dispositif selon l'invention peuvent être appliqués au contrôle de divers produits ou médicaments se présentant sous forme de pilules ou de billes. Ils peuvent également être appliqués dans presque tous les domaines de contrôle de pièces, notamment pour le contrôle de produits tels que des plombs de chasse, des billes de roulement, des boutons de vêtement, etc...

Revendications.

1. Procédé pour détecter les défauts d'une pièce, caractérisé en ce qu'il consiste à :

- exercer sur ladite pièce (21) un ensemble de forces susceptibles de la mettre en ouvement,

- détecter les mouvements de la pièce,

- déterminer des mouvements de référence, et

- comparer lesdits mouvements de la pièce (21) aux mouvements de référence.

2. Procédé selon la revendication 1, caractérisé en ce qu'il consiste à déterminer des mouvements de référence en :

- exerçant ledit ensemble de forces sur une pièce exempte de défaut, et en

- choisissant comme mouvements de référence les mouvements de ladite pièce exempte de défaut engendrés par ledit ensemble de forces.

3. Procédé selon l'une des revendications 1 et 2, caractérisé en ce qu'il consiste à exercer sur ladite pièce (21) un ensemble de forces propre à la faire vibrer librement dans un milieu donné, de préférence à une fréquence de résonance de ladite pièce dans ledit milieu.

4. Procédé selon la revendication 3, caractérisé en ce qu'il consiste à comparer les mouvements de ladite pièce (21) aux mouvements de référence en comparant les amplitudes de ces deux mouvements ainsi que le déphasage de l'un par rapport à l'autre.

5. Procédé selon l'une des revendications 1 à 4, caractérisé

0050557

en ce qu'il consiste à détecter les mouvements de ladite pièce (21) en la plaçant dans un milieu susceptible d'être perturbé par les mouvements de la pièce, et en détectant les perturbations du milieu engendrées par les mouvements de ladite pièce.

6. Procédé selon la revendication 5, caractérisé en ce qu'il consiste à placer ladite pièce dans un champ électromagnétique ou sonore de longueur d'onde appropriée.

7. Dispositif de détection de défauts d'une pièce mettant en oeuvre le procédé selon l'une des revendications 1 à 6, caractérisé en ce qu'il comprend :

- des moyens d'action (9, 32) pour exercer sur ladite pièce (21) un ensemble de forces susceptible de la mettre en mouvement;

- des moyens de détection (13) pour détecter les mouvements de ladite pièce (21),

- des moyens d'émission (22-25) émettant un signal représentatif desdits mouvements de référence,

- des moyens de comparaison (28, 29, 30) pour comparer les mouvements détectés de ladite pièce (21) aux signaux représentatifs desdits mouvements de référence.

8. Dispositif selon la revendication 7, caractérisé en ce que les moyens d'action comportent un générateur de vibrations (9, 32) agissant sur le support (15) sur lequel repose librement ladite pièce (21).

9. Dispositif selon la revendication 8, caractérisé en ce que lesdits moyens d'émission comprennent un détecteur de déplacement (22, 23, 24) dudit support et éventuellement une ou plusieurs références fixes.

10. Dispositif selon l'une des revendications 7 à 8, caractérisé en ce que lesdits moyens de détection comprennent :

- un moyen d'éclairage (1) mono- ou poly-chromatique de ladite pièce (21), et

- un moyen de mesure (13) des perturbations du flux lumineux engendrées par les mouvements de ladite pièce.

11. Dispositif selon la revendication 10, caractérisé en ce que ledit moyen d'éclairage (1) et ledit moyen de mesure (13) sont solidaires du support (15) sur lequel repose librement ladite pièce (21).

12. Dispositif selon la revendication 10 ou 11, caractérisé en ce que :

- ledit support (15) sur lequel repose librement ladite pièce (21) est transparent au flux issu dudit moyen d'éclairage (1),

- ledit moyen d'éclairage (1) et ledit moyen de mesure (13) sont situés de part et d'autre de ladite pièce (21),

- il comporte de plus un moyen pour masquer en partie la projection de ladite pièce (21) sur ledit moyen de mesure (13) suivant la direction du flux lumineux.

13. Dispositif selon l'une des revendications 8 à 12, caractérisé en ce que le support (15) comporte une alvéole dans laquelle ladite pièce (21) prend place avec du jeu.

14. Dispositif selon l'une des revendications 8 à 13, caractérisé en ce que le support (15) constitue une partie de l'emballage de ladite pièce.

15. Dispositif selon l'une des revendications 8 à 14, caractérisé en ce que lesdits moyens de comparaison comprennent :

- un comparateur de phase (30) et un comparateur d'amplitude (28, 29) reliés auxdits moyens de détection (13), et

- un circuit logique d'erreur (31) relié aux sorties des comparateurs (28-30) et signalant si la pièce est ou n'est pas exempte de défaut.

FIG. 1

FIG. 2

FIG. 3

FIG. 4

**Office européen**

**des brevets**

**RAPPORT DE RECHERCHE EUROPEENNE**

0050557

Numéro de la demande

EP 81 40 1588

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | G 01 M 7/00<br>G 01 N 3/32<br>G 01 N 29/04 |
| | <u>DE - A - 2 137 876</u> (O. FUCHS) | | |
| | * page 6, lignes 1-16 * | 1-3,6 | |
| | <u>DE - A - 2 116 522</u> (LICENTIA) | | |
| | * page 8, ligne 10 à page 9, ligne 3; page 10, lignes 1-13 * | 1,6 | |
| | <u>US - A - 3 029 943</u> (M.J. DIAMOND et al.) | | **DOMAINES TECHNIQUES RECHERCHES (Int. Cl. ³)** |
| | * colonne 1, lignes 13-28; colonne 7, lignes 3-19 * | 1,3 | G 01 N 3/00<br>3/32<br>3/38<br>19/08<br>29/00<br>29/04<br>G 01 M 7/00 |
| | <u>US - A - 3 534 588</u> (M.W. SCHULZ) | | |
| | * colonne 2, ligne 65 à colonne 3, ligne 17; figures * | 8,9 | |
| | <u>FR - A - 973 420</u> (R. MIMEUR) | | |
| | * page 1, colonne de droite, lignes 14-30; figures 1-3 * | 8,13 | |
| | <u>GB - A - 397 167</u> (S.M. DIXON) | | **CATEGORIE DES DOCUMENTS CITES** |
| | * page 4, lignes 66-81; figure 2 * | 10 | X: particulièrement pertinent à lui seul<br>Y: particulièrement pertinent en combinaison avec un autre document de la même catégorie<br>A: arrière-plan technologique<br>O: divulgation non-écrite<br>P: document intercalaire<br>T: théorie ou principe à la base de l'invention<br>E: document de brevet antérieur, mais publié à la date de dépôt ou après cette date<br>D: cité dans la demande<br>L: cité pour d'autres raisons |
| | | | &: membre de la même famille, document correspondant |

| | Le présent rapport de recherche a été établi pour toutes les revendications | |
|---|---|---|
| Lieu de la recherche<br>La Haye | Date d'achèvement de la recherche<br>11.01.1982 | Examinateur<br>ANTHONY |

OEB Form 1503.1   06.78